# EUROPEAN PATENT APPLICATION

(11) **EP 4 502 267 A1**
(43) Date of publication of application: **05.02.2025**
(21) Application number: 23780104.8
(22) Date of filing: 23.03.2023
(51) Int. Cl.: D06M 13/322, D06M 13/395, D06M 15/693

(54) **CODE FOR RUBBER REINFORCEMENT USE**

(30) Priority: 31.03.2022 JP 2022060983
(71) Applicant: NIPPON SHEET GLASS COMPANY, LIMITED, Tokyo 108-6321 (JP)
(72) Inventor: YAMAGUCHI, Tatsuya, Tokyo 108-6321 (JP)
(74) Representative: Cabinet Beau de Loménie
(86) International application number: PCT/JP2023/011670
(87) International publication number: WO 2023/190094

(57) **Abstract**

A rubber-reinforcing cord according to the present invention includes at least one strand. The strand includes at least one filament bundle and a coating provided to cover at least a portion of a surface of the filament bundle. The coating includes a rubber component except for carboxylated hydrogenated nitrile rubber, a maleimide crosslinking agent, and an isocyanate compound as essential components, and includes a filler as an optional component. In the coating, a sum of the maleimide crosslinking agent and the isocyanate compound is 10 to 100 parts by mass with respect to 100 parts by mass of the rubber component, a mass ratio of the maleimide crosslinking agent to the isocyanate compound, expressed as a mass of the maleimide crosslinking agent/a mass of the isocyanate compound, is more than 1, and the filler is less than 10 parts by mass with respect to 100 parts by mass of the rubber component.

## Description

### TECHNICAL FIELD

The present invention relates to a rubber-reinforcing cord.

### BACKGROUND ART

Rubber belts and metal chains are used to drive camshafts in automobile internal combustion engines, drive accessories such as injection pumps, and transmit power in industrial machinery. With the growing focus on energy efficiency in recent years, the use of rubber belts, which exhibit excellent power transmission efficiency, has gained attention from the perspective of enhancing fuel efficiency and other factors. Rubber belts also have the advantages over metal chains, such as high strength and elastic modulus, thus being usable even under high load conditions.

Rubber products, such as rubber belts, typically include matrix rubber and a rubber-reinforcing cord embedded in the matrix rubber. The strength of rubber belts depends on the strength of the rubber-reinforcing cord. Therefore, rubber-reinforcing cords are crucial members that determine the lifespan of rubber belts.

A rubber product including a rubber-reinforcing cord may suffer fraying of the rubber-reinforcing cord on an edge surface of the rubber product. For example, in a toothed belt, such as a timing belt typically used for driving a camshaft in an internal combustion engine, a rubber-reinforcing cord is exposed on the side surface of the belt due to the production process. This exposure tends to lead to fraying at the exposed portion of the rubber-reinforcing cord, causing fibers to protrude from the edge surface of the belt. The fibers protruding from the edge surface of the belt can be prone to a failure such as winding of the fibers around a pulley during the use of the belt. In addition, fraying can cause damage to spread from the frayed portion across the rubber belt. Such issues can reduce the durability of the rubber product. In response to this, reinforcing cords resistant to fraying have been pursued.

Patent Literatures 1 to 3 disclose rubber-reinforcing cords resistant to fraying.

Patent Literature 1 discloses a rubber-reinforcing cord obtained by using glass fiber filaments as reinforcing fibers and properly selecting, for example, the number of twists of a strand obtained by assembling the glass fiber filaments.

Patent Literature 2 discloses a cord obtained by treating untwisted aramid fibers used as the reinforcing fibers with a resorcinol formaldehyde latex (RFL) solution, and then collecting several treated fibers and twisting them together.

Patent Literature 3 discloses a rubber-reinforcing cord obtained by forming a coating on the surface of a bundle of filaments, which are reinforcing fibers, by using a specific water-based treatment agent. The specific water-based treatment agent used is a treatment agent including a rubber latex, a crosslinking agent, and a filler, wherein the content of the crosslinking agent is 50 parts by mass or more and 150 parts by mass or less per 100 parts by mass of solids contained in the rubber latex, and the content of the filler is more than 50 parts by mass and 80 parts by mass or less per 100 parts by mass of the solids contained in the rubber latex.

### CITATION LIST

Patent Literature
Patent Literature 1: JP 2010-111983 A
Patent Literature 2: JP 2008-208997 A
Patent Literature 3: WO 2015/098105

### SUMMARY OF INVENTION

### Technical Problem

The above conventional rubber-reinforcing cords have not been sufficient in terms of improving fraying resistance while maintaining excellent bending resistance.

In view of this, the present invention aims to provide a rubber-reinforcing cord that can simultaneously achieve both excellent fraying resistance and excellent bending resistance.

### Solution to Problem

The present invention is a rubber-reinforcing cord for reinforcing a rubber product, the rubber-reinforcing cord including at least one strand, wherein
the strand includes at least one filament bundle and a coating provided to cover at least a portion of a surface of the filament bundle,
the coating includes a rubber component except for carboxylated hydrogenated nitrile rubber, a maleimide crosslinking agent, and an isocyanate compound as essential components, and includes a filler as an optional component,
in the coating,
a sum of the maleimide crosslinking agent and the isocyanate compound is 10 to 100 parts by mass with respect to 100 parts by mass of the rubber component,
a mass ratio of the maleimide crosslinking agent to the isocyanate compound, expressed as a mass of the maleimide crosslinking agent/a mass of the isocyanate compound, is more than 1, and
the filler is less than 10 parts by mass with respect to 100 parts by mass of the rubber component.

### Advantageous Effects of Invention

The rubber-reinforcing cord of the present invention can simultaneously achieve both excellent fraying resistance and excellent bending resistance.

### BRIEF DESCRIPTION OF DRAWING

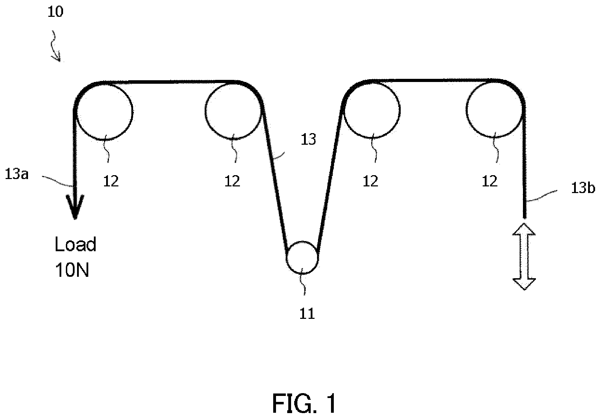

FIG. 1 is a diagram schematically showing the method of a bending test conducted on rubber-reinforcing cords of examples and comparative examples.

### DESCRIPTION OF EMBODIMENTS

The following specifically describes an embodiment of a rubber-reinforcing cord of the present invention.

The rubber-reinforcing cord of the present embodiment is a cord for reinforcing rubber products. The rubber-reinforcing cord includes at least one strand. The strand includes at least one filament bundle (reinforcing fibers) and a coating provided to cover at least a portion of the surface of the filament bundle.

The coating includes a rubber component except for carboxylated hydrogenated nitrile rubber, a maleimide crosslinking agent, and an isocyanate compound as essential components, and includes a filler as an optional component. In other words, the coating may include the filler or may not include the filler.

In the coating, the sum of the maleimide crosslinking agent and the isocyanate compound is 10 to 100 parts by mass with respect to 100 parts by mass of the rubber component, and the mass ratio of the maleimide crosslinking agent to the isocyanate compound, expressed as the mass of the maleimide crosslinking agent/the mass of the isocyanate compound, is more than 1. Furthermore, in the coating, the filler is less than 10 parts by mass with respect to 100 parts by mass of the rubber component.

The rubber-reinforcing cord of the present embodiment includes the coating that includes in which the above rubber component is included and the maleimide crosslinking agent and the isocyanate compound are used together as crosslinking agents. Furthermore, in the coating, the sum of the contents of the maleimide crosslinking agent and the isocyanate compound, the mass ratio of the maleimide crosslinking agent to the isocyanate compound, and the content of the filler are specified in the above ranges. Since the coating includes both the maleimide crosslinking agent and the isocyanate compound, the crosslinking effect (adhesion) is significantly enhanced. This enhances the fraying resistance of the rubber-reinforcing cord of the present embodiment. Furthermore, since the maleimide crosslinking agent and the isocyanate compound are blended in the coating so as to satisfy the above requirements, hardening of the coating is reduced, thereby also maintaining excellent bending resistance of the rubber-reinforcing cord. Therefore, the rubber-reinforcing cord of the present embodiment can improve fraying resistance while maintaining excellent bending resistance, thereby simultaneously achieving both excellent fraying resistance and excellent bending resistance.

The reinforcing cord of the present embodiment is described below in more detail.

In the rubber-reinforcing cord of the present embodiment, the filament bundle composing the strand includes a plurality of filaments. The material of the filaments is not limited to any particular material. The filaments of the rubber-reinforcing cord of the present embodiment can be, for example, glass fiber filaments, polyvinyl alcohol fiber filaments typified by vinylon fibers, polyester fiber filaments, polyamide fiber filaments such as nylon and aramid (aromatic polyamide) fibers, carbon fiber filaments, or poly(p-phenylene benzobisoxazole) (PBO) fiber filaments. Among these, filaments of fibers having excellent dimensional stability, tensile strength, modulus, and bending fatigue resistance are preferably used. It is preferable to use, for example, at least one type of fiber filaments selected from the group consisting of glass fiber filaments, aramid fiber filaments, poly(p-phenylene benzobisoxazole) fiber filaments, and carbon fiber filaments. The filament bundle may be composed of one type of filaments, or may be composed of two or more types of filaments.

The number of filaments included in the filament bundle is not limited to any particular number. The filament bundle can include, for example, 200 to 48,000 filaments.

The surfaces of the filaments included in the filament bundle may be subjected to a pretreatment for increasing the bond strength. One preferred example of the pretreatment agent is a compound containing at least one functional group selected from the group consisting of an epoxy group and an amino group. Examples of the pretreatment agent include aminosilanes, epoxysilanes, novolac epoxy resins, bisphenol A epoxy resins, bisphenol F epoxy resins, brominated epoxy resins, bisphenol AD epoxy resins, and glycidyl amine epoxy resins. Specific examples thereof include Denacol series available from Nagase ChemteX Corporation, EPICLON series available from DIC Corporation, and Epikote series available from Mitsubishi Chemical Corporation. Polyurethane resins and isocyanate compounds can also be used as the pretreatment agent. For example, a treatment agent including at least one selected from the group consisting of an epoxy resin, a urethane resin, and an isocyanate compound may be used as the pretreatment agent. By the pretreatment performed using such a treatment agent, a resin layer including at least one selected from the group consisting of an epoxy resin, a urethane resin, and an isocyanate compound is further provided between the filament bundle and the coating. The pretreatment of the surface can enhance the adhesion between a matrix rubber and the rubber-reinforcing cord also when less-adhesive fiber filaments, such as polyparaphenylene terephthalamide fiber filaments, are used. A coating (pretreatment agent coating) formed from the pretreatment agent on the surfaces of the filaments by the pretreatment of the filaments is different from the coating as defined in the present embodiment, covering at least a portion of the surface of the filament bundle, and is not included in the coating defined in the present embodiment.

The number of filament bundles included in the rubber-reinforcing cord is not limited, and may be one or may be two or more. The filament bundle may be a bundle of a plurality of filament bundles. In this case, each of the plurality of filament bundles may be twisted or may not be twisted. Furthermore, the plurality of filament bundles may be twisted together as one bundle or may not be twisted together as one bundle.

The coating is provided to cover at least a portion of the surface of the filament bundle. The coating may be provided directly on the surface of the filament bundle or may cover the surface of the filament bundle with another layer (e.g., a coating formed by the pretreatment of the filaments described above, such as the above pretreatment agent coating) interposed therebetween. The rubber-reinforcing cord of the present embodiment may include no additional coating other than the above coating. In other words, in the rubber-reinforcing cord of the present embodiment, the coating covering the surface of the above filament bundle may be composed of only the above coating.

The coating is formed by providing a water-based treatment agent for coating formation, described later, onto at least a portion of the surface of the filament bundle and drying the treatment agent by heat treatment. The water-based treatment agent can be provided onto the surface of the filament bundle, for example, by impregnating the filament bundle with the water-based treatment agent for coating formation, or by applying the water-based treatment agent for coating formation onto at least a portion of the surface of the filament bundle. This heat treatment almost completely removes the moisture inherent in the filaments and the solvent (e.g., water) of the water-based treatment agent.

The coating includes the rubber component except for carboxylated hydrogenated nitrile rubber (X-HNBR), as described above. The rubber component may be, for example, at least one selected from the group consisting of butadiene-styrene copolymer, dicarboxylated butadiene-styrene polymer, vinylpyridine-butadiene-styrene terpolymer, chloroprene, butadiene rubber, chlorosulfonated polyethylene, nitrile rubber (NBR), hydrogenated nitrile rubber (HNBR), and carboxylated nitrile rubber (X-NBR). The rubber component is preferably at least one selected from the group consisting of hydrogenated nitrile rubber and carboxylated nitrile rubber.

The coating includes the maleimide crosslinking agent and the isocyanate compound, as described above. The maleimide crosslinking agent and the isocyanate compound function as crosslinking agents in the coating. In other words, in the present embodiment, the coating uses the maleimide crosslinking agent and the isocyanate compound together as crosslinking agents. In the coating, the sum of the maleimide crosslinking agent and the isocyanate compound is 10 to 100 parts by mass, preferably 10 to 80 parts by mass, more preferably 30 to 80 parts by mass, and even more preferably 30 to 70 parts by mass with respect to 100 parts by mass of the rubber component. In the case where the sum of the maleimide crosslinking agent and the isocyanate compound is 10 to 80 parts by mass in the coating, fraying resistance and bending resistance are excellent. In the case where the sum of the maleimide crosslinking agent and the isocyanate compound is 30 to 80 parts by mass in the coating, fraying resistance and bending resistance are more excellent. In the case where the sum of the maleimide crosslinking agent and the isocyanate compound is 30 to 70 parts by mass in the coating, fraying resistance and bending resistance are even more excellent (especially, further enhanced bending resistance). The sum of the maleimide crosslinking agent and the isocyanate compound may be 60 parts by mass or less with respect to 100 parts by mass of the rubber component.

The mass ratio of the maleimide crosslinking agent to the isocyanate compound in the coating is more than 1, as described above. In other words, in the coating, the content of the maleimide crosslinking agent is more than one time the content of the isocyanate compound. The mass ratio of the maleimide crosslinking agent to the isocyanate compound may be 1.5 or more, preferably more than 1.5, more preferably 2.0 or more, and even more preferably 3.0 or more. The upper limit for the mass ratio of the maleimide crosslinking agent to the isocyanate compound is not limited to a particular value. The mass ratio is, for example, 20.0 or less, preferably 10.0 or less, more preferably 8.0 or less, and even more preferably 6.0 or less.

The content of the maleimide crosslinking agent in the coating can be adjusted as appropriate so as to satisfy the above requirements, i.e., so as to satisfy the sum of the masses of the maleimide crosslinking agent and the isocyanate compound and the mass ratio of the maleimide crosslinking agent to the isocyanate compound. In the coating, the content of the maleimide crosslinking agent may be, for example, 5 to 95 parts by mass, 5 to 75 parts by mass, or 5 to 60 parts by mass with respect to 100 parts by mass of the rubber component. Examples of the maleimide crosslinking agent include bismaleimide, phenylmaleimide, and N,N'-m-phenylenedimaleimide. The maleimide crosslinking agent preferably includes 4,4'-bismaleimidodiphenylmethane.

The content of the isocyanate compound in the coating can be adjusted as appropriate so as to satisfy the above requirements, i.e., so as to satisfy the sum of the masses of the maleimide crosslinking agent and the isocyanate compound and the mass ratio of the maleimide crosslinking agent to the isocyanate compound. In the coating, the content of the isocyanate compound may be, for example, 5 to 95 parts by mass, 5 to 75 parts by mass, or 5 to 60 parts by mass with respect to 100 parts by mass of the rubber component. Examples of the isocyanate compound include aromatic or aliphatic organic diisocyanates, polyisocyanates, blocked isocyanates, and blocked polyisocyanates. The isocyanate compound preferably includes a blocked isocyanate.

For example, it is preferable, in the coating, that the sum of the maleimide crosslinking agent and the isocyanate compound is 30 to 80 parts by mass with respect to 100 parts by mass of the rubber component and, that the mass ratio of the maleimide crosslinking agent to the isocyanate compound is more than 1 and 10 or less. The coating having such a configuration can achieve a rubber-reinforcing cord that is particularly excellent in both fraying resistance and bending resistance.

The coating may further include the filler. In other words, in the coating, the filler may be more than 0 parts by mass and less than 10 parts by mass with respect to 100 parts by mass of the rubber component. Examples of the filler include: fine particles of covalent compounds such as carbon black and silica; fine particles of practically insoluble salts; fine particles of metal oxides; fine particles of metal hydroxides; and fine particles of complex metal oxide salts such as talc. The filler, when dispersed in the rubber, exerts an effect of enhancing the properties of the coating, such as tensile strength and tear strength. In addition to the above effect, the filler exerts an effect of, between the fibers and the coating and between the coating and a matrix rubber, enhancing the cohesive force of an adhesive component to enhance the bond strength therebetween. In the coating, the content of the filler is less than 10 parts by mass and preferably 7 parts by mass or less with respect to 100 parts by mass of the rubber component, as described above. In the case where the coating includes the filler, excellent bending resistance can be maintained by the content of the filler in the coating being less than 10 parts by mass with respect to 100 parts by mass of the rubber component. In the case where the coating includes the filler, the content of the filler in the coating may be more than 0 parts by mass or 3 parts by mass or more with respect to 100 parts by mass of the rubber component. Furthermore, the coating may also be free of the filler (i.e., containing 0 parts by mass).

The coating is preferably free of a resorcinol-formaldehyde condensate. In the case where the coating is free of a resorcinol-formaldehyde condensate, substances with a high environmental load, such as formaldehyde and ammonia, are unnecessary for the production of the coating. Thus, no environmental measures for workers are required.

The coating may further include an additional component besides the above components.

The sum of the contents of the rubber component, the isocyanate compound, the bismaleimide compound, and the filler (hereinafter also simply referred to as "four components") in the coating is not limited to a particular value. The sum of the contents of the above four components in the coating is desirably 70 mass% or more and more desirably 90 mass% or more. The coating may be composed substantially of only the above four components. Being composed substantially of only the above four components means that the sum of the contents of the above four components in the coating is 95 mass% or more. Furthermore, the coating may be composed of only the above four components.

The proportion of the coating in the entire rubber-reinforcing cord is not limited to any particular proportion, and is only required to be adjusted as appropriate. The coating is preferably provided so as to account for 1 to 35% of the total mass of the rubber-reinforcing cord. The mass of the coating may be 10 to 30% or 15 to 30% of the total mass of the rubber-reinforcing cord. An excessively large mass of the coating can cause a defect such as a decrease in the dimensional stability of the rubber-reinforcing cord in a rubber product or a decrease in the elastic modulus of the rubber-reinforcing cord. On the other hand, an excessively small mass of the coating can, for example, increase the likelihood of fraying of the strand or decrease the fiber protecting function of the coating, thereby shortening the lifespan of a rubber product.

To enhance the adhesion to a matrix rubber, the rubber-reinforcing cord of the present embodiment may additionally include, on its surface, another coating (hereinafter referred to as a "second coating") for enhancing the adhesion to a rubber product. In the case where sufficient adhesion to the matrix rubber of a rubber product cannot be obtained with the above coating alone, the second coating is preferably formed on the surface of the cord given final twists to enhance the adhesion to the matrix rubber. The component of the second coating may be any substance capable of improving the adhesion to a matrix rubber. Preferably used are, for example, a halogen-containing-polymer adhesive (e.g., Chemlok manufactured by LORD Corporation) and an adhesive including an H-NBR rubber and a crosslinking agent (e.g., a maleimide crosslinking agent).

The number of twists given to the rubber-reinforcing cord of the present embodiment is not limited to any particular number. The number of twists given to one strand (such twists are hereinafter also referred to as "primary twists") may be, for example, 20 to 160 twists/m, 30 to 120 twists/m, or 40 to 100 twists/m. Furthermore, the number of twists given to a plurality of the strands (such twists are hereinafter also referred to as "final twists") may be, for example, 20 to 160 twists/m, 30 to 120 twists/m, or 40 to 100 twists /m likewise. Lang lay may be employed in which the direction of primary twists and the direction of final twists are the same, or regular lay may be employed in which the direction of primary twists and the direction of final twists are opposite. The directions of the twists are not limited, and may be the S direction or the Z direction.

The following describes one example of a production method for the rubber-reinforcing cord of the present embodiment. The matters specified above for the rubber-reinforcing cord of the present embodiment are applicable to the production method below, and redundant descriptions of the matters may thus be omitted. The matters specified for the production method described below are applicable to the rubber-reinforcing cord of the present embodiment. This example of the production method includes the following steps.

First, a plurality of filaments are assembled into a filament bundle, and a water-based treatment agent for coating formation is prepared for use in coating formation. Next, the water-based treatment agent for coating formation is provided onto at least a portion of the surface of the filament bundle. Subsequently, heat treatment is performed to remove the solvent in the water-based treatment agent for coating formation.

Through the above steps, a coating is formed on the at least portion of the surface of the filament bundle. The method for providing the water-based treatment agent for coating formation onto the at least portion of the surface of the filament bundle is not limited. For example, the water-based treatment agent for coating formation may be applied onto the surface of the filament bundle, or the filament bundle may be immersed in the water-based treatment agent for coating formation.

The conditions for heat treatment to remove the solvent in the water-based treatment agent for coating formation are not limited to any particular conditions; however, it is necessary to avoid drying under conditions that cause the reaction of the crosslinking agent in the coating to proceed to completion. For this reason, drying at a relatively high temperature (e.g., 80°C or more) is preferably performed for a short drying time (e.g., 5 minutes or less). For example, drying in an atmosphere of 150°C or less may be performed for a drying time of 5 minutes or less. In one example, drying in an atmosphere of 80°C to 280°C should be performed for 0.1 to 2 minutes.

The filament bundle having the coating thereon may be twisted in one direction. The direction of twisting may be the S direction or the Z direction. The number of filaments included in the filament bundle and the number of twists given to the filament bundle are as specified above, and thus are not repeatedly described. The rubber-reinforcing cord of the present embodiment can be produced in this manner. A plurality of the filament bundles each having the coating thereon may be formed, then assembled together, and given final twists. The direction of the final twists may be the same as or different from the direction of the twists of each filament bundle (the direction of the primary twists). Alternatively, a plurality of the filament bundles each having the coating thereon and not twisted each may be formed, then assembled together, and given twists.

The coating may be formed after the filament bundle is twisted. The type of filaments, the number of filaments, and the number of twists given to the filaments are as described above.

In one preferred example of the production method of the present embodiment, the rubber-reinforcing cord is formed by twisting the filament bundle in one direction after applying the water-based treatment agent for coating formation onto the filament bundle or impregnating the filament bundle with the water-based treatment agent for coating formation.

Next, the water-based treatment agent for coating formation is described.

The water-based treatment agent for coating formation preferably includes a latex of the rubber constituting the rubber component of the coating. For example, in the case where the rubber component of the coating is carboxylated nitrile rubber, the water-based treatment agent for coating formation includes a latex of the carboxylated nitrile rubber. The water-based treatment agent for coating formation may include only one type of rubber latex or may include two or more types of rubber latexes, depending on the rubber component of the coating.

The water-based treatment agent for coating formation further includes a bismaleimide compound and an isocyanate compound. These components included in the water-based treatment agent for coating formation are the same as those described above, and thus are not repeatedly described. These components are also preferably used in the form of aqueous dispersions in order to allow the components to be uniformly present in the water-based treatment agent.

The water-based treatment agent for coating formation may further include a filler. Examples of the filler, which may be included in the water-based treatment agent for coating formation, are the same as those described above as the filler included in the coating, and thus are not repeatedly described.

The water-based treatment agent for coating formation is preferably free of a resorcinol-formaldehyde condensate.

The water-based treatment agent for coating formation may further include an additional component besides those described above. For example, the water-based treatment agent for coating formation may further include, as the additional component, a resin, a plasticizer, an anti-aging agent, a stabilizer, etc.

The rubber-reinforcing cord of the present embodiment is used to reinforce a rubber product. The rubber product to be reinforced with the rubber-reinforcing cord of the present embodiment is not limited to a particular type. Examples of the rubber product to be reinforced with the rubber-reinforcing cord of the present embodiment include tires of automobiles and bicycles and transmission belts. Examples of the transmission belts include synchronous transmission belts and friction transmission belts. Examples of the synchronous transmission belts include toothed belts typified by timing belts for automobiles. Examples of the friction transmission belts include flat belts, round belts, V belts, and V-ribbed belts. In other words, the rubber product to be reinforced with the rubber-reinforcing cord of the present embodiment may be a toothed belt, a flat belt, a round belt, a V belt, or a V-ribbed belt.

A rubber product reinforced with the rubber-reinforcing cord of the present embodiment is formed by embedding the rubber-reinforcing cord of the present embodiment in the rubber composition (matrix rubber). The technique for embedding the rubber-reinforcing cord in the matrix rubber is not limited to any particular technique, and a commonly-known technique may be employed. A rubber product in which the rubber-reinforcing cord of the present embodiment is embedded, such as a rubber belt, has excellent bending resistance and high durability. Therefore, the rubber-reinforcing cord of the present embodiment is particularly suitable for reinforcing rubber products, such as timing belts for vehicle engines and belts for driving accessories for vehicles.

### Examples

The embodiment of the present invention is described below in more detail with reference to examples and comparative examples.

### [Production of rubber-reinforcing cord]

### (Example 1)

Twelve thousand carbon fiber filaments were assembled into a filament bundle. The carbon fiber filaments had an average diameter of 7 µm. The filament bundle was immersed in a water-based treatment agent for coating formation having the composition shown in Table 1, and then dried at 200°C for 2 minutes to obtain one carbon fiber cord having a coating. The rubber component contained in the treatment agent was carboxylated nitrile rubber (X-NBR). The carbon fiber cord was given twists in one direction at a rate of 80 twists/m. Next, to enhance adhesion to the matrix rubber, a halogen-containing-polymer adhesive (Chemlok 402 (manufactured by LORD Corporation)) was applied onto the above coating, followed by drying. Thus, the second coating was additionally formed on the above coating. Thus, a rubber-reinforcing cord of Example 1 was obtained. The mass of the coating (excluding the second coating) in the rubber-reinforcing cord was 20% of the total mass of the rubber-reinforcing cord.

### (Examples 2 to 11)

Rubber-reinforcing cords of Examples 2 to 11 were formed under the same conditions as in Example 1, with the exception that the composition of the water-based treatment agent for coating formation was changed to the composition shown in Table 1.

### (Comparative Examples 1 to 14)

Rubber-reinforcing cords of Comparative Examples 1 to 14 were formed in the same manner as in Example 1, with the exception that the composition of the water-based treatment agent for coating formation was changed to the composition shown in Table 2.

### (Examples 12 to 16)

Rubber-reinforcing cords of Examples 12 to 16 were formed under the same conditions as in Example 1, with the exception that the composition of the water-based treatment agent for coating formation was changed to the composition shown in Table 3. The rubber component contained in the treatment agent was hydrogenated nitrile rubber (HNBR).

### (Comparative Examples 15 to 20)

Rubber-reinforcing cords of Comparative Examples 15 to 20 were formed in the same manner as in Example 1, with the exception that the composition of the water-based treatment agent for coating formation was changed to the composition shown in Table 4. The rubber component contained in the treatment agent was hydrogenated nitrile rubber (HNBR).

**[Table 1]**

| | | | Example | | | | |
|---|---|---|---|---|---|---|---|
| | | | 1 | 2 | 3 | 4 | 5 |
| Water-ba sed treatment agent for coating formation | Carboxylated nitril rubber latex (*1) | Parts by mass | 100 | 100 | 100 | 100 | 100 |
| | 4,4'-Bismaleimidodiphenylmethane | Parts by mass | 10 | 30 | 40 | 50 | 50 |
| | Blocked isocyanate (*2) | Parts by mass | 5 | 20 | 5 | 10 | 30 |
| | Mass ratio of maleimide crosslinking agent/isocyanate compound | | 2 | 1.5 | 8 | 5 | 1.67 |
| | Carbon black | Parts by mass | 0 | 0 | 0 | 0 | 0 |
| | Sum of crosslinking agents | Parts by mass | 15 | 50 | 45 | 60 | 80 |
| Fraying resistance | | | 4 | 5 | 5 | 5 | 5 |
| Strength retention rate | | % | 99 | 92 | 91 | 95 | 81 |

| | | | | | | | |
|---|---|---|---|---|---|---|---|
| (*1) Nipol Latex (carboxylated type: manufactured by Zeon Corporation) (*2) MEIKANATE DM-7000 (manufactured by Meisei Chemical Works, Ltd.) | | | | | | | |

**[Table 1] (Continued)**

| | | | Example | | | | | |
|---|---|---|---|---|---|---|---|---|
| | | | 6 | 7 | 8 | 9 | 10 | 11 |
| Water-ba sed treatment agent for coating formation | Carboxylated nitril rubber latex (*1) | Parts by mass | 100 | 100 | 100 | 100 | 100 | 100 |
| | 4,4'-Bismaleimidodiphenylmethane | Parts by mass | 70 | 80 | 95 | 30 | 50 | 80 |
| | Blocked isocyanate (*2) | Parts by mass | 5 | 20 | 5 | 20 | 10 | 20 |
| | Mass ratio of maleimide crosslinking agent/isocyanate compound | | 14 | 4 | 19 | 1.5 | 5 | 4 |
| | Carbon black | Parts by mass | 0 | 0 | 0 | 5 | 5 | 5 |
| | Sum of crosslinking agents | Parts by mass | 75 | 100 | 100 | 50 | 60 | 100 |
| Fraying resistance | | | 4 | 4 | 4 | 5 | 5 | 4 |
| Strength retention rate | | % | 85 | 73 | 75 | 89 | 90 | 70 |

| | | | | | | | | |
|---|---|---|---|---|---|---|---|---|
| (*1) Nipol Latex (carboxylated type: manufactured by Zeon Corporation) (*2) MEIKANATE DM-7000 (manufactured by Meisei Chemical Works, Ltd.) | | | | | | | | |

**[Table 2]**

| | | | Comparative Example | | | | | | |
|---|---|---|---|---|---|---|---|---|---|
| | | | 1 | 2 | 3 | 4 | 5 | 6 | 7 |
| Water-ba sed treatment agent for coating formation | Carboxylated nitril rubber latex (*3) | Parts by mass | 100 | 100 | 100 | 100 | 100 | 100 | 100 |
| | 4,4'-Bismaleimidodiphenylmethane | Parts by mass | 0 | 0 | 0 | 0 | 0 | 5 | 30 |
| | Blocked isocyanate (*4) | Parts by mass | 0 | 5 | 40 | 50 | 100 | 0 | 100 |
| | Mass ratio of maleimide crosslinking agent/isocyanate compound | | - | - | - | - | - | - | 0.3 |
| | Carbon black | Parts by mass | 0 | 0 | 0 | 0 | 0 | 0 | 0 |
| | Sum of crosslinking agents | Parts by mass | 0 | 5 | 40 | 50 | 100 | 5 | 130 |
| Fraying resistance | | | 1 | 1 | 2 | 2 | 3 | 1 | 4 |
| Strength retention rate | | % | 33 | 100 | 97 | 92 | 77 | 100 | 39 |

| | | | | | | | | | |
|---|---|---|---|---|---|---|---|---|---|
| (*3) Nipol Latex (carboxylated type: manufactured by Zeon Corporation) (*4) MEIKANATE DM-7000 (manufactured by Meisei Chemical Works, Ltd.) | | | | | | | | | |

**[Table 2] (Continued)**

| | | | Comparative Example | | | | | | |
|---|---|---|---|---|---|---|---|---|---|
| | | | 8 | 9 | 10 | 11 | 12 | 13 | 14 |
| Water-ba sed treatment agent for coating formation | Carboxylated nitril rubber latex (*3) | Parts by mass | 100 | 100 | 100 | 100 | 100 | 100 | 100 |
| | 4,4'-Bismaleimidodiphenylmethane | Parts by mass | 40 | 50 | 60 | 80 | 100 | 80 | 30 |
| | Blocked isocyanate (*4) | Parts by mass | 90 | 0 | 70 | 50 | 30 | 20 | 70 |
| | Mass ratio of maleimide crosslinking agent/isocyanate compound | | 0.44 | - | 0.86 | 1.6 | 3.33 | 4 | 0.43 |
| | Carbon black | Parts by mass | 0 | 0 | 0 | 0 | 0 | 15 | 0 |
| | Sum of crosslinking agents | Parts by mass | 130 | 50 | 130 | 130 | 130 | 100 | 100 |
| Fraying resistance | | | 5 | 3 | 5 | 4 | 4 | 4 | 4 |
| Strength retention rate | | % | 49 | 90 | 36 | 43 | 45 | 64 | 59 |

| | | | | | | | | | |
|---|---|---|---|---|---|---|---|---|---|
| (*3) Nipol Latex (carboxylated type: manufactured by Zeon Corporation) (*4) MEIKANATE DM-7000 (manufactured by Meisei Chemical Works, Ltd.) | | | | | | | | | |

**[Table 3]**

| | | | Example | | | | |
|---|---|---|---|---|---|---|---|
| | | | 12 | 13 | 14 | 15 | 16 |
| Water-ba sed treatment agent for coating formation | Hydrogenated nitrile rubber latex (*5) | Parts by mass | 100 | 100 | 100 | 100 | 100 |
| | 4,4'-Bismaleimidodiphenylmethane | Parts by mass | 10 | 30 | 40 | 50 | 70 |
| | Blocked isocyanate (*6) | Parts by mass | 5 | 20 | 5 | 10 | 5 |
| | Mass ratio of maleimide crosslinking agent/isocyanate compound | | 2 | 1.5 | 8 | 5 | 14 |
| | Carbon black | Parts by mass | 0 | 0 | 0 | 0 | 0 |
| | Sum of crosslinking agents | Parts by mass | 15 | 50 | 45 | 60 | 75 |
| Fraying resistance | | | 4 | 5 | 5 | 5 | 4 |
| Strength retention rate | | % | 98 | 91 | 96 | 97 | 85 |

| | | | | | | | |
|---|---|---|---|---|---|---|---|
| (*5) Zetpol Latex (manufactured by Zeon Corporation) (*6) MEIKANATE DM-7000 (manufactured by Meisei Chemical Works, Ltd.) | | | | | | | |

**[Table 4]**

| | | | Comparative Example | | | | | |
|---|---|---|---|---|---|---|---|---|
| | | | 15 | 16 | 17 | 18 | 19 | 20 |
| Water-ba sed treatment agent for coating formation | Hydrogenated nitrile rubber latex (*7) | Parts by mass | 100 | 100 | 100 | 100 | 100 | 100 |
| | 4,4'-Bismaleimidodiphenylmethane | Parts by mass | 0 | 0 | 5 | 30 | 70 | 100 |
| | Blocked isocyanate (*8) | Parts by mass | 0 | 5 | 0 | 100 | 70 | 30 |
| | Mass ratio of maleimide crosslinking agent/isocyanate compound | | - | - | - | 0.3 | 1 | 3.33 |
| | Carbon black | Parts by mass | 0 | 0 | 0 | 0 | 0 | 0 |
| | Sum of crosslinking agents | Parts by mass | 0 | 5 | 5 | 130 | 140 | 130 |
| Fraying resistance | | | 1 | 1 | 1 | 5 | 4 | 5 |
| Strength retention rate | | % | 38 | 100 | 100 | 44 | 39 | 40 |

| | | | | | | | | |
|---|---|---|---|---|---|---|---|---|
| (*7) Zetpol Latex (manufactured by Zeon Corporation) (*8) MEIKANATE DM-7000 (manufactured by Meisei Chemical Works, Ltd.) | | | | | | | | |

### [Evaluation of rubber-reinforcing cord]

### (Fraying resistance)

First, the rubber-reinforcing cords of the examples and the comparative examples were each cut into a 200 mm long piece as a sample for fraying resistance evaluation. The sample was arranged on the surface of a matrix rubber precursor having the composition shown in Table 5 below and a sheet shape (25 mm × 200 mm × 3 mm (thickness)) in such a manner that the length direction of the pieces of the sample and the length direction of the matrix rubber precursor were the same and that the adjacent pieces were parallel to each other with no space therebetween. On the above matrix rubber precursor was then stacked another sheet-shaped matrix rubber precursor having the same size as the above matrix rubber precursor in such a manner that the sample arranged as above was held between the precursors.

Next, the above pair of precursors holding the sample therebetween was hot-pressed from both sides thereof at 150°C for 20 minutes. The hot press turned the pair of matrix rubber precursors, which contained a vulcanizing agent, into a vulcanized matrix rubber, thus producing a rubber sample having the rubber-reinforcing cord sample embedded therein.

Subsequently, the rubber sample produced was cut parallel to the length direction of the rubber sample with a cutting machine, and the condition of the edge surface of the cut rubber sample was visually evaluated. The evaluation employed five ratings. A rating of "5" was given when the cut surface was smooth and no carbon fibers frayed on the cut surface; a rating of "4" was given when the cut surface was smooth, but several carbon fibers frayed on the cut surface; a rating of "3" was given when the cut surface was smooth, but several carbon fibers frayed on the cut surface and the cord had a crack; a rating of "2" was given when the cut surface was smooth, but several tens of carbon fibers frayed and protruded from the cut surface or the cord had a crack and carbon fibers protruded from the cut surface starting at the crack; and a rating of "1" was given when even the smoothness of the cut surface was not obtained. The evaluation results of the fraying resistance of the rubber-reinforcing cords of the examples and the comparative examples are shown in Tables 1 to 4.

### (Bending resistance)

The rubber-reinforcing cords of the examples and the comparative examples were each embedded in a matrix rubber having the composition shown in Table 5 below to obtain a sample (size: 300 mm × 10 mm × 3 mm) for bending resistance evaluation.

**[Table 5]**

| Component | Mass ratio |
|---|---|
| Hydrogenated nitrile rubber (*9) | 70 |
| Hydrogenated nitrile rubber containing zinc dimethacrylate (*10) | 30 |
| Zinc oxide | 10 |
| Stearic acid | 1 |
| Carbon black | 30 |
| Trioctyl trimellitate | 5 |
| Sulfar | 0.1 |
| 1,3-Bis(t-butylperoxyisopropyl)benzene | 6 |
| Magnesium oxide | 1 |
| 4,4'-(α,α-Dimethylbenzyl)diphenylamine | 0.5 |
| 2-Mercaptobenzimidazole zinc salt | 0.5 |
| Triallyl isocyanurate | 1 |

| | |
|---|---|
| (*9) Zetpol 2020 (manufactured by Zeon Corporation) (*10) Zetpol 2000L (manufactured by Zeon Corporation) | |

The samples were each subjected to a bending test in which bending was applied 50,000 times. The bending test was conducted with a bending tester 10 shown in FIG. 1. The samples were each measured for tensile strength before and after the bending test. As used herein, tensile strength refers to the breaking strength (in units of N/cord) obtained by conducting a tensile test with a tensile tester and a cord grip that are commonly used.

The bending tester 10 included one flat pulley 11 having a diameter of 10 mm, a motor (not shown in the figure), and four guide pulleys 12. First, a sample 13 produced was hung on the five pulleys. Then, a weight was attached to one end 13a of the sample 13 to apply a load of 10 N to the sample 13. In this state, the other end 13b of the sample 13 was reciprocated 50,000 times in the direction indicated by the arrows shown in FIG. 1 to repeatedly bend the sample 13 around the flat pulley 11. The bending test was conducted at room temperature. The sample 13 was subjected to the bending test in this manner, and then the tensile strength of the sample after the bending test was measured.

The ratio of the tensile strength of the sample after the bending test to the tensile strength of the sample before the bending test, namely the strength retention rate (%), was determined. A higher value of the strength retention rate indicates more excellent bending resistance. The evaluation results of the bending resistance of the rubber-reinforcing cords of the examples and the comparative examples are shown in Tables 1 to 4.

### (Evaluation results)

In each of the coatings of the rubber-reinforcing cords of Examples 1 to 16, the sum of the maleimide crosslinking agent and the isocyanate compound was 10 to 100 parts by mass with respect to 100 parts by mass of the rubber component; the mass ratio of the maleimide crosslinking agent to the isocyanate compound was more than 1; and the filler was less than 10 parts by mass with respect to 100 parts by mass of the rubber component. The rubber-reinforcing cords of Examples 1 to 16 each had a fraying resistance rated as 4 or more and a strength retention rate of 70% or more, exhibiting excellent results in both fraying resistance and bending resistance.

In each of the coatings of the rubber-reinforcing cords of Examples 1 to 6, 9, 10, and 12 to 16, the sum of the maleimide crosslinking agent and the isocyanate compound was 10 to 80 parts by mass with respect to 100 parts by mass of the rubber component, and the mass ratio of the maleimide crosslinking agent to the isocyanate compound was more than 1. The rubber-reinforcing cords of Examples 1 to 6, 9, 10, and 12 to 16 each had a fraying resistance rated as 4 or more and a strength retention rate of 80% or more, exhibiting more excellent results in both fraying resistance and bending resistance.

In each of the coatings of the rubber-reinforcing cords of Examples 2 to 5, 9, 10, and 13 to 15, the sum of the maleimide crosslinking agent and the isocyanate compound was 30 to 80 parts by mass with respect to 100 parts by mass of the rubber component, and the mass ratio of the maleimide crosslinking agent to the isocyanate compound was more than 1 and 10 or less. These rubber-reinforcing cords of Examples 2 to 5, 9, 10, and 13 to 15 each had a fraying resistance rated as 5 out of 5 and a strength retention rate of 80% or more, exhibiting particularly excellent results in both fraying resistance and bending resistance.

In contrast, among the rubber-reinforcing cords of Comparative Examples 1 to 20, those (Comparative Examples 1 to 6, 9, and 15 to 17), in which the coatings did not have the addition of the maleimide crosslinking agent and/or the isocyanate compound, each resulted in a reduction in fraying resistance. Furthermore, in each of the rubber-reinforcing cords of Comparative Examples 7, 8, 10 to 12, and 18 to 20 in which the sum of the amounts of the crosslinking agents was more than 100 parts by mass, the fraying resistance was enhanced. However, in these cords, the coating became hard, resulting in a reduction in strength retention rate. Moreover, in the rubber-reinforcing cord of Comparative Example 14, the sum of the amounts of the crosslinking agents satisfied the range from 10 to 100 parts by mass with respect to 100 parts by mass of the rubber component, but the mass ratio of the maleimide crosslinking agent to the isocyanate compound was 1 or less. In this cord, although the fraying resistance was enhanced, the coating became hard, resulting in a reduction in strength retention rate as above. Additionally, in the rubber-reinforcing cord of Comparative Example 13, the sum of the amounts of the crosslinking agents satisfied the range from 10 to 100 parts by mass with respect to 100 parts by mass of the rubber component, and the mass ratio of the maleimide crosslinking agent to the isocyanate compound was more than 1. However, in this cord, carbon black was contained in a content of more than 10 parts by mass with respect to 100 parts by mass of the rubber component. Consequently, in this cord, although the fraying resistance was enhanced, the coating became hard, resulting in a reduction in strength retention rate.

### INDUSTRIAL APPLICABILITY

The present invention can be applied to rubber-reinforcing cords for reinforcing rubber products.

## Claims

1. A rubber-reinforcing cord for reinforcing a rubber product, the rubber-reinforcing cord comprising at least one strand, wherein
the strand includes at least one filament bundle and a coating provided to cover at least a portion of a surface of the filament bundle,
the coating includes a rubber component except for carboxylated hydrogenated nitrile rubber, a maleimide crosslinking agent, and an isocyanate compound as essential components, and includes a filler as an optional component,
in the coating,
a sum of the maleimide crosslinking agent and the isocyanate compound is 10 to 100 parts by mass with respect to 100 parts by mass of the rubber component,
a mass ratio of the maleimide crosslinking agent to the isocyanate compound, expressed as a mass of the maleimide crosslinking agent/a mass of the isocyanate compound, is more than 1, and
the filler is less than 10 parts by mass with respect to 100 parts by mass of the rubber component.

2. The rubber-reinforcing cord according to claim 1, wherein
in the coating, the mass ratio of the maleimide crosslinking agent to the isocyanate compound, expressed as the mass of the maleimide crosslinking agent/the mass of the isocyanate compound, is 1.5 or more.

3. The rubber-reinforcing cord according to claim 1 or 2, wherein
in the coating, the maleimide crosslinking agent is 5 to 95 parts by mass and the isocyanate compound is 5 to 95 parts by mass with respect to 100 parts by mass of the rubber component.

4. The rubber-reinforcing cord according to claim 1 or 2, wherein
in the coating, the sum of the maleimide crosslinking agent and the isocyanate compound is 10 to 80 parts by mass with respect to 100 parts by mass of the rubber component.

5. The rubber-reinforcing cord according to claim 4, wherein
in the coating, the maleimide crosslinking agent is 5 to 75 parts by mass and the isocyanate compound is 5 to 75 parts by mass with respect to 100 parts by mass of the rubber component.

6. The rubber-reinforcing cord according to claim 1 or 2, wherein
in the coating,
the sum of the maleimide crosslinking agent and the isocyanate compound is 30 to 80 parts by mass with respect to 100 parts by mass of the rubber component, and
the mass ratio of the maleimide crosslinking agent to the isocyanate compound, expressed as the mass of the maleimide crosslinking agent/the mass of the isocyanate compound, is more than 1 and 10 or less.

7. The rubber-reinforcing cord according to claim 6, wherein
in the coating,
the sum of the maleimide crosslinking agent and the isocyanate compound is 30 to 70 parts by mass with respect to 100 parts by mass of the rubber component.

8. The rubber-reinforcing cord according to any one of claims 1 to 7, wherein
the rubber component is at least one selected from the group consisting of butadiene-styrene copolymer, dicarboxylated butadiene-styrene polymer, vinylpyridine-butadiene-styrene terpolymer, chloroprene, butadiene rubber, chlorosulfonated polyethylene, nitrile rubber, hydrogenated nitrile rubber, and carboxylated nitrile rubber.

9. The rubber-reinforcing cord according to claim 8, wherein
the rubber component is at least one selected from the group consisting of hydrogenated nitrile rubber and carboxylated nitrile rubber.

10. The rubber-reinforcing cord according to any one of claims 1 to 9, wherein
the maleimide crosslinking agent includes 4,4'-bismaleimide diphenylmethane.

11. The rubber-reinforcing cord according to any one of claims 1 to 10, wherein
the isocyanate compound includes a blocked isocyanate.
